# EUROPÄISCHE PATENTANMELDUNG

(11) **EP 4 567 583 A1**
(43) Veröffentlichungstag der Anmeldung: **11.06.2025**
(21) Anmeldenummer: 23214531.8
(22) Anmeldetag: 06.12.2023
(51) Int. Cl.: G06F 3/16, G06T 13/40, G06T 19/20

(54) **VERFAHREN ZUR AKUSTISCHEN UND VISUELLEN AUSGABE EINES AUSZUSPRECHENDEN INHALTS DURCH EINEN AVATAR**

(71) Anmelder: goAVA GmbH, 40479 Düsseldorf (DE)
(72) Erfinder: SCHELLENBERGER, Jan, 19055 Schwerin (DE)
(74) Vertreter: Von Rohr Patentanwälte Partnerschaft mbB

(57) **Zusammenfassung**

Es wird ein Verfahren zur akustischen und visuellen Ausgabe eines auszusprechenden Inhalts durch einen Avatar vorgeschlagen, wobei eine Eingabe durch einen Nutzer erfolgt und als Reaktion darauf ein auszusprechender Inhalt erzeugt und durch den Avatar ausgegeben wird. Während der Eingabe durch den Nutzer bis zur Ausgabe des auszusprechenden Inhalts erfolgt die visuelle Darstellung des Avatars mittels einer vorgegebenen Bewegungssequenz, die eine vorgegebene Abspiellänge von weniger als 1 s aufweist. Des Weiteren werden eine Vorrichtung, ein Computerprogramm und ein computerlesbarer Datenträger zur Durchführung des vorschlagsgemäßen Verfahrens vorgeschlagen.

## Beschreibung

Die vorliegende Erfindung betrifft ein Verfahren zur akustischen und visuellen Ausgabe eines auszusprechenden Inhalts durch einen Avatar gemäß dem Oberbegriff von Anspruch 1, eine Vorrichtung zur Datenverarbeitung, ein Computerprogramm sowie einen computerlesbaren Datenträger.

Bei üblichen Verfahren erfolgt zunächst eine Eingabe durch einen Nutzer. Basierend auf der Eingabe wird als Reaktion ein auszusprechender Inhalt erzeugt. Der auszusprechende Inhalt kann anschließend durch den Avatar ausgegeben werden. Der auszusprechende Inhalt wird dabei akustisch ausgegeben. Zusätzlich zur akustischen Ausgabe erfolgt in der Regel eine visuelle Ausgabe, wobei der Avatar zur akustischen Ausgabe synchrone Lippenbewegungen durchführt. Während der Eingabe und/oder der Erzeugung des auszusprechenden Inhalts kann der Avatar mittels eines Standbilds statisch oder mittels bewegter Bilder dynamisch ohne Sprechbewegungen dargestellt werden. In der Regel kann für eine dynamische Darstellung eine Videosequenz mit Bewegungen des Avatars abgespielt werden. Entsprechende Videosequenzen sollen eine ausreichende Länge bzw. Dauer aufweisen, um die Zeit der Eingabe und der Erzeugung des auszusprechenden Inhalts zu überdauern. Das Abspielen der Videosequenz kann mehrere Minuten dauern.

Wenn der auszusprechende Inhalt erzeugt ist und ausgegeben werden kann, wird in der Regel gerade die Videosequenz abgespielt. Entsprechend muss mit der Ausgabe des auszusprechenden Inhalts abgewartet werden, bis die Videosequenz zu Ende abgespielt ist. Bis die Videosequenz zu Ende abgespielt ist, können mehrere Minuten vergehen. Der Zeitraum zwischen der Eingabe durch den Nutzer und der Ausgabe durch den Avatar wird dann zusätzlich zu der Zeit, die bereits zur Erzeugung des Inhalts vergangen ist, verlängert. Ein entsprechend großer Zeitversatz von bis zu mehreren Minuten zwischen der Eingabe des Nutzers und dem Beginn der Ausgabe durch den Avatar ist für eine direkte Kommunikation zwischen dem Nutzer und dem Avatar unzuträglich und wird vom Nutzer als unkomfortabel angesehen.

Alternativ besteht die Möglichkeit, die Videosequenz abzubrechen, sobald der auszusprechende Inhalt ausgegeben werden kann. Ein solcher Abbruch der Videosequenz führt dazu, dass ein, insbesondere visueller, sprunghafter Übergang zwischen der Videosequenz und der Bewegung des Avatars bei der Ausgabe des auszusprechenden Inhalts für den Nutzer sichtbar wird. Ein entsprechender sprunghafter Übergang bei der Avatarbewegung kann vom Nutzer als unnatürliche Bewegung bzw. Wiedergabe des Avatars wahrgenommen und als störend empfunden werden.

Der vorliegenden Erfindung liegt die Aufgabe zugrunde, ein im Vergleich zum Stand der Technik verbessertes Verfahren zur akustischen und visuellen Ausgabe eines auszusprechenden Inhalts durch einen Avatar bereitzustellen, wobei ein schneller und gleichmäßiger Übergang zwischen einer Bewegung des Avatars ohne Sprechbewegungen zu einer akustischen und visuellen Ausgabe eines auszusprechenden Inhalts ermöglicht und/oder unterstützt wird, wobei eine besonders einfache, benutzerfreundliche und/oder intuitive Kommunikation geschaffen und/oder unterstützt wird.

Die der vorliegenden Erfindung zugrunde liegende Aufgabe wird durch das Verfahren gemäß Anspruch 1, die Vorrichtung zur Datenverarbeitung gemäß Anspruch 13, das Computerprogramm gemäß Anspruch 14 oder den computerlesbaren Datenträger gemäß Anspruch 15 gelöst.

Die vorliegende Erfindung betrifft ein, insbesondere computerimplementiertes, Verfahren zur akustischen und visuellen Ausgabe eines auszusprechenden Inhalts durch einen Avatar.

Unter dem Begriff "Avatar" sind im Rahmen der vorliegenden Erfindung digitale Wesen mit anthropomorphem Aussehen zu verstehen, die von Menschen oder Software gesteuert werden und die Fähigkeit besitzen, zu interagieren.

Vorzugsweise wird bzw. werden das vorschlagsgemäße Verfahren, insbesondere einzelne oder alle Verfahrensschritte des vorschlagsgemäßen Verfahrens, mittels einer Vorrichtung zur Datenverarbeitung (teil-)automatisch bzw. selbsttätig durchgeführt, insbesondere durch entsprechende Mittel zur Datenverarbeitung und Steuerung der Vorrichtung, wie eine Datenverarbeitungseinrichtung oder dergleichen.

Bei dem vorschlagsgemäßen Verfahren zur akustischen und visuellen Ausgabe eines auszusprechenden Inhalts durch einen Avatar erfolgt zunächst eine Eingabe durch einen Nutzer. Der auszusprechende Inhalt wird als Reaktion auf die Eingabe erzeugt und kann anschließend durch den Avatar ausgegeben werden.

Das vorschlagsgemäße Verfahren zeichnet sich dadurch aus, dass eine visuelle Darstellung des Avatars während der Eingabe durch den Nutzer und/oder der Erzeugung des auszusprechenden Inhalts und/oder bis zur Ausgabe des auszusprechenden Inhalts mittels wenigstens einer vorgegebenen Bewegungssequenz erfolgt, wobei die vorgegebene Bewegungssequenz eine vorgegebene Abspiellänge von weniger als 1 s aufweist, und/oder wobei die vorgegebene Bewegungssequenz eine vorgegebene Anzahl von weniger als 60 Frames aufweist.

Unter dem Begriff "Bewegungssequenz" ist im Rahmen der vorliegenden Erfindung eine insbesondere vorproduzierte bzw. vorbereitete Videodatei bzw. eine Datei mit bewegten Bildern zu verstehen, die eine Bewegung des Avatars bzw. den Avatar in Bewegung zeigt.

Aufgrund der kurzen Abspiellänge der Bewegungssequenz kann die Ausgabe des auszusprechenden Inhalts innerhalb von weniger als 1 s erfolgen, nachdem der auszusprechende Inhalt erzeugt ist und insbesondere mit synchronen Lippenbewegungen des Avatars ausgegeben werden kann. Aufgrund der kurzen vorgegebenen Abspiellänge ist es nicht notwendig, das Abspielen der Bewegungssequenz zu unterbrechen, wodurch ein sprunghafter Übergang zur Ausgabe des auszusprechenden Inhalts durch den Avatar vermieden werden kann. Die Bewegungssequenz kann zu Ende abgespielt werden, ohne eine für den Nutzer als lang empfundene Wartezeit zu erzeugen. Die Darstellung des Avatars kann dann flüssig von einer bewegten Darstellung während der Eingabe in die Sprechbewegung bei der Ausgabe des auszusprechenden Inhalts übergehen.

Unter dem Begriff "flüssig" ist im Rahmen der vorliegenden Erfindung zu verstehen, dass die Darstellung des Avatars ruckelfrei erfolgt und beim Übergang von der Bewegungssequenz zur Ausgabe des auszusprechenden Inhalts für den Nutzer kein sprunghafter Übergang, sondern eine gleichmäßige, natürliche Bewegung des Avatars zu erkennen ist.

Es ist dann auch nicht notwendig, die Bewegungen des Avatars während der Eingabe durch den Nutzer bis zur Ausgabe des auszusprechenden Inhalts und/oder einen Übergang zwischen den Bewegungen während der Eingabe und der Ausgabe zu simulieren bzw. zu berechnen. Auf diese Weise kann das Verfahren besonders effizient bzw. mit wenig Rechenleistung durchgeführt werden.

Die Wartezeit für den Nutzer kann weiter verkürzt werden, wenn die Bewegungssequenz eine vorgegebene Abspiellänge von weniger als 0,75 s, vorzugsweise von weniger als 0,6 s, weiter vorzugsweise von 0,5 s oder weniger, und/oder von mehr als 0,25 s, aufweist, vorzugsweise dass die Bewegungssequenz eine vorgegebene Abspiellänge von 0,4 s bis 0,5 s aufweist.

Alternativ oder zusätzlich ist es auch möglich, dass die Bewegungssequenz eine vorgegebene Anzahl von weniger als 40 Frames, vorzugsweise weniger als 30 Frames, weiter vorzugsweise weniger als 25 Frames, und/oder mehr als 10 Frames, aufweist, insbesondere dass die Bewegungssequenz eine vorgegebene Anzahl von 13 bis 23 Frames aufweist.

Die Eingabe durch den Nutzer und die Erzeugung des auszusprechenden Inhalts kann länger als 1 s dauern. Es ist dann möglich, die vorgegebene Bewegungssequenz wiederholt nacheinander abzuspielen. Um einen flüssigen Übergang zwischen dem Ende und dem Anfang der Bewegungssequenz zu erreichen können der Anfang, insbesondere der erste Frame, und das Ende, insbesondere der letzte Frame, der Bewegungssequenz identisch sein. Alternativ können der Anfang, insbesondere der erste Frame, und das Ende, insbesondere der letzte Frame, der Bewegungssequenz derart ähnlich zueinander sein, dass bei einer wiederholten Wiedergabe der Bewegungssequenz ein flüssiger Übergang zwischen dem Ende und dem Anfang der Bewegungssequenz sichergestellt ist. Auf diese Weise kann dem Nutzer ein Gefühl einer natürlichen Kommunikation vermittelt werden.

Die Bewegungssequenz zeigt vorzugsweise ein Blinzeln, ein Nasenrümpfen, ein Lächeln, eine Augenbewegung, eine Handbewegung, eine Kopfbewegung und/oder ein Zurechtrücken einer Brille und/oder eines Kleidungs- bzw. Schmuckstücks des Avatars, wobei auch die Darstellung anderer, insbesondere natürlicher, Bewegungen möglich ist.

Gemäß einem weiteren Aspekt der vorliegenden Erfindung, sind vorzugsweise mehrere vorgegebene Bewegungssequenzen vorgesehen bzw. gespeichert oder hinterlegt. Die Bewegungssequenz kann dann aus einer Mehrzahl von Bewegungssequenzen ausgewählt werden. Es ist dann möglich, verschiedene Bewegungen des Avatars auch nacheinander darzustellen, beispielsweise ein Blinzeln gefolgt von einer Kopfbewegung. Die Auswahl der Bewegungssequenz kann dabei zufällig, in einer vorgegebenen Reihenfolge und/oder nach weiteren Auswahlkriterien erfolgen.

So ist es beispielsweise möglich, dass eine Echtzeitanalyse der Eingabe des Nutzers durchgeführt wird und die Auswahl der Bewegungssequenz basierend auf der Echtzeitanalyse erfolgt. Auf diese Weise kann der Avatar eine zeitnahe nonverbale Reaktion auf die vom Nutzer erfolgende Eingabe ausgeben, wie beispielsweise ein Lächeln als Reaktion auf eine positive Aussage.

Werden zwei oder mehrere unterschiedliche vorgegebene Bewegungssequenzen unmittelbar hintereinander abgespielt, ist es vorteilhaft, wenn zwischen den einzelnen Bewegungssequenzen ein flüssiger Übergang vorgesehen ist. Das kann erreicht werden, wenn der Anfang, insbesondere der erste Frame, und das Ende, insbesondere der letzte Frame, jeder Bewegungssequenz gleich oder derart ähnlich sind, dass bei einer Wiedergabe von zwei aufeinander folgenden Bewegungssequenzen ein flüssiger Übergang zwischen den Bewegungssequenzen erzielt wird.

Während der visuellen Darstellung des Avatars mittels der Bewegungssequenz kann ein Abbruchkriterium überprüft werden. Insbesondere kann bei erfülltem Abbruchkriterium die Bewegungssequenz zu Ende abgespielt und im Anschluss der auszusprechende Inhalt durch den Avatar ausgegeben werden. Alternativ oder zusätzlich kann bei Nichterfüllung des Abbruchkriteriums die Bewegungssequenz zu Ende ausgegeben und im Anschluss eine weitere Bewegungssequenz ausgegeben oder die Bewegungssequenz wiederholt ausgegeben werden. Das Abbruchkriterium ist insbesondere erfüllt, wenn der erzeugte Inhalt akustisch mit dazu synchronen Lippenbewegungen durch den Avatar ausgegeben werden kann.

Die Eingabe durch den Nutzer kann insbesondere mittels eines Large Language Models analysiert werden. Basierend auf der Analyse der Eingabe kann ein auszusprechender Inhalt generiert und/oder ausgewählt werden.

Für die Ausgabe des auszusprechenden Inhalts mit synchronen Lippenbewegungen durch den Avatar kann eine vorgegebene Lippenbewegungssequenz verwendet und gleichzeitig mit der akustischen Ausgabe des auszusprechenden Inhalts abgespielt bzw. ausgegeben werden. Unter dem Begriff "Lippenbewegungssequenz" ist im Rahmen der vorliegenden Erfindung eine über eine vorgegebene Zeitdauer andauernde Lippenbewegung zu verstehen.

Insbesondere kann die Lippenbewegungssequenz aus einer Mehrzahl von vorgegebenen Lippenbewegungssequenzen ausgewählt werden. Es ist möglich, dass die vorgegebene Lippenbewegungssequenz in Abhängigkeit von dem auszusprechenden Inhalt ausgewählt wird, um eine am besten zum Inhalt passende Lippenbewegungssequenz auszuwählen.

Um beim Abspielen einer vorgegebenen Bewegungssequenz und einer nachfolgenden vorgegebenen Lippenbewegungssequenz einen flüssigen Übergang sicherzustellen, ist vorzugsweise vorgesehen, dass der Anfang, insbesondere der erste Frame, der vorgegebenen Lippenbewegungssequenz und das Ende, insbesondere der letzte Frame, der Bewegungssequenz identisch oder derart ähnlich ausgebildet sind, dass bei einer Wiedergabe der Bewegungssequenz mit anschließender Wiedergabe der Lippenbewegungssequenz ein flüssiger Übergang erzielt wird.

Nach der Ausgabe kann der Nutzer eine erneute Eingabe vornehmen. Der Avatar wird dann insbesondere durch natürlich zuhörende Bewegungen dargestellt. Vorzugsweise können der Anfang, insbesondere der erste Frame, der vorgegebenen Bewegungssequenz und das Ende, insbesondere der letzte Frame, der vorgegebenen Lippenbewegungssequenz identisch oder derart ähnlich ausgebildet sein, dass bei einer Wiedergabe der Lippenbewegungssequenz mit anschließender Wiedergabe der Bewegungssequenz ein flüssiger Übergang erzielt wird.

Vorzugsweise ist vorgesehen, dass wenigstens ein Verfahrensschritt mittels eines Computers durchgeführt wird.

Gemäß einem weiteren Aspekt der vorliegenden Erfindung wird eine Vorrichtung zur Datenverarbeitung umfassend Mittel zur Ausführung des vorschlagsgemäßen Verfahrens vorgeschlagen. Auf alle Ausführungen zum vorschlagsgemäßen Verfahren darf insoweit verwiesen werden. Insbesondere werden entsprechende Vorteile erzielt.

Gemäß einem weiteren Aspekt der vorliegenden Erfindung wird ein Computerprogramm, umfassend Befehle, die bei Ausführung des Computerprogramms durch einen Computer diesen veranlassen, ein vorschlagsgemäßes Verfahren auszuführen, vorgeschlagen. Auf alle Ausführungen zum vorschlagsgemäßen Verfahren darf insoweit verwiesen werden. Insbesondere werden entsprechende Vorteile erzielt.

Gemäß einem weiteren Aspekt der vorliegenden Erfindung wird ein, insbesondere nichtflüchtiger, computerlesbarer Datenträger, auf dem das vorschlagsgemäße Computerprogramm gespeichert ist, vorgeschlagen. Auf alle Ausführungen zum vorschlagsgemäßen Computerprogramm darf insoweit verwiesen werden. Insbesondere werden entsprechende Vorteile erzielt.

Die vorgenannten Aspekte, Merkmale und Verfahrensschritte sowie die sich aus den Ansprüchen und der nachfolgenden Beschreibung ergebenden Aspekte, Merkmale und Verfahrensschritte der vorliegenden Erfindung können grundsätzlich unabhängig voneinander, aber auch in beliebiger Kombination und/oder Reihenfolge realisiert werden.

Die vorgenannten Aspekte, Merkmale und Verfahrensschritte sowie die sich aus den Ansprüchen und der nachfolgenden Beschreibung ergebenden Aspekte, Merkmale und Verfahrensschritte der vorliegenden Erfindung können grundsätzlich unabhängig voneinander, aber auch in beliebiger Kombination und/oder Reihenfolge realisiert werden.

Weitere Aspekte, Vorteile, Merkmale, Eigenschaften sowie vorteilhafte Weiterbildungen der vorliegenden Erfindung ergeben sich aus den Ansprüchen und der nachfolgenden Beschreibung bevorzugter Ausführungsformen anhand der Figuren. Es zeigen in schematischer, nicht maßstabsgetreuer Darstellung:
- Fig. 1: eine schematische Ansicht einer vorschlagsgemäßen Vorrichtung zur Datenverarbeitung, die dazu ausgebildet ist, einen auszusprechenden Inhalt akustisch und visuell durch einen Avatar auszugeben,
- Fig. 2: ein schematisches Ablaufdiagramm eines vorschlagsgemäßen Verfahrens zur akustischen und visuellen Ausgabe eines auszusprechenden Inhalts durch einen Avatar bzw. einzelner Verfahrensschritte des vorschlagsgemäßen Verfahrens,
- Fig. 3: eine schematische Darstellung von zwei nacheinander abspielbaren vorgegebenen Bewegungssequenzen, wobei der Anfang und das Ende der Bewegungssequenzen identisch sind, und
- Fig. 4: eine schematische Darstellung einer Lippenbewegungssequenz und einer nachfolgend abspielbaren Bewegungssequenz mit identischem Anfang und Ende.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften oder Vorteile erreicht werden, auch wenn von einer Wiederholung abgesehen wird.

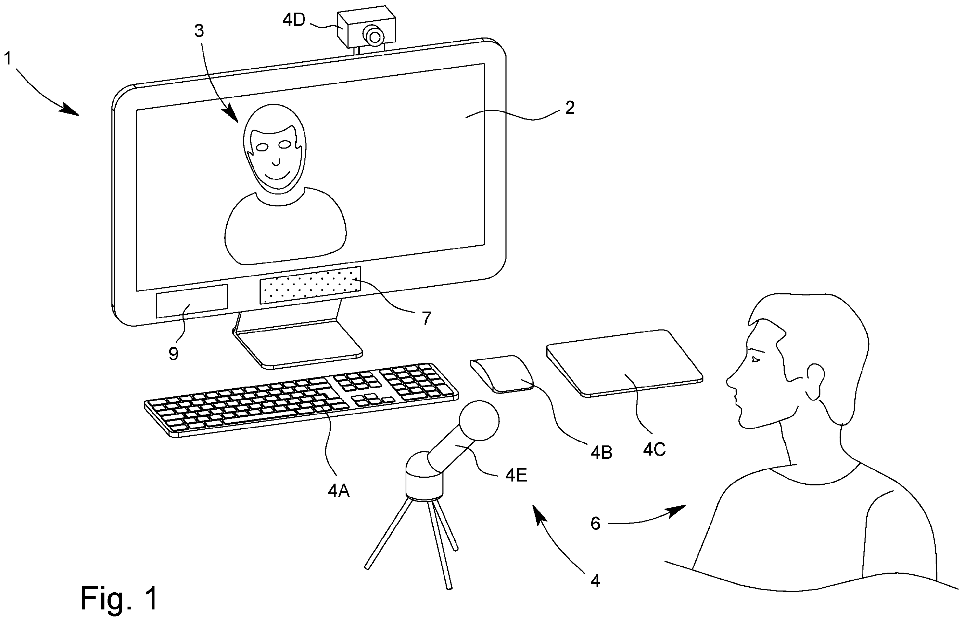

Fig. 1 zeigt eine schematische Ansicht einer Vorrichtung 1 zur Datenverarbeitung, insbesondere einen Computer. Bei der Vorrichtung 1 zur Datenverarbeitung kann es sich auch um einen Laptop, ein Tablet, ein Mobiltelefon oder dergleichen handeln.

Die Vorrichtung 1 weist vorzugsweise eine visuelle Ausgabeeinrichtung, insbesondere Bildschirm 2, zur Anzeige bzw. Wiedergabe eines Avatars 3 auf. Der Bildschirm 2 ist insbesondere zur Wiedergabe von bewegten Bildern, insbesondere des Avatars 3, ausgebildet. Mittels des Bildschirms 2 können Bewegungen des Avatars 3 und insbesondere Bewegungen des Avatars 3 beim Sprechen, vorzugsweise ruckelfrei, dargestellt werden.

Des Weiteren weist die Vorrichtung 1 eine Eingabeeinrichtung 4 zur Eingabe eines Eingabeinhalts 5 auf. Die Eingabeeinrichtung 4 kann integraler Bestandteil der Vorrichtung 1 sein oder als separates Eingabegerät ausgebildet sein.

Die Eingabeeinrichtung 4 kann beispielsweise eine Tastatur 4A, eine Maus 4B, ein Touchpad/Trackpad 4C, eine Kamera 4D, ein Mikrofon 4E und/oder einen Touchscreen zur Eingabe des Eingabeinhalts 5 aufweisen.

Beispielsweise kann das Mikrofon 4E in die Kamera 4D integriert sein. Es ist alternativ oder zusätzlich möglich, dass der Bildschirm 2 als Touchscreen ausgebildet oder ein Touchscreen in den Bildschirm 2 integriert ist.

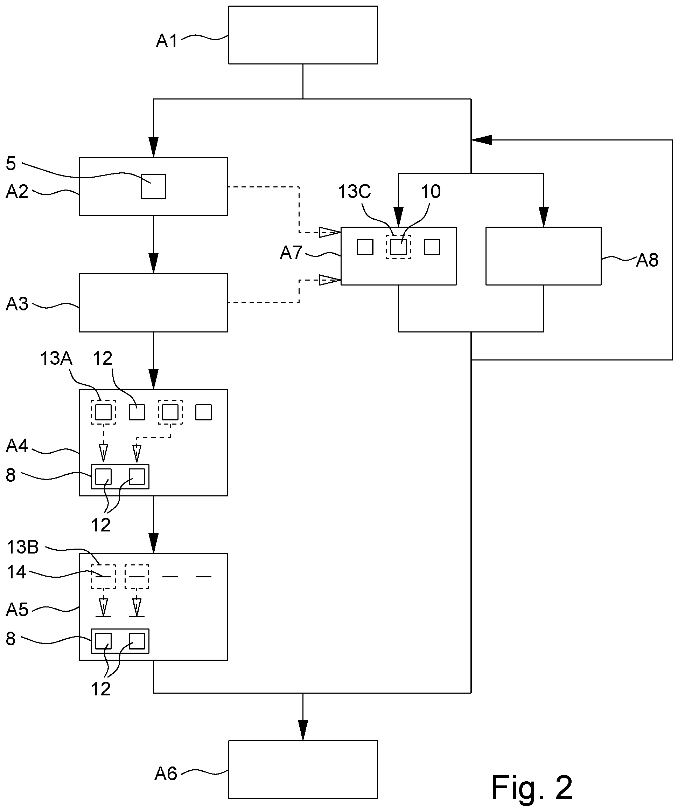

Ein Nutzer 6 kann über die Eingabeeinrichtung 4 einen Eingabeinhalt 5 (Fig. 2) eingeben. Bei dem Eingabeinhalt 5 kann es sich insbesondere um eine akustische Eingabe handeln, insbesondere mittels des Mikrofons 4E. So kann der Nutzer 6 beispielsweise eine Frage akustisch stellen oder akustisch um bestimmte Informationen bitten. Alternativ oder zusätzlich kann die Eingabe des Eingabeinhalts 5 auch mittels der Tastatur 4A, der Maus 4B, dem Touchpad/Trackpad 4C, der Kamera 4D und/oder dem Touchscreen erfolgen. Auch eine kombinierte akustische und motorische Eingabe mittels Mikrofon 4E und Tastatur 4A, Maus 4B, Tochpad 4C und/oder Touchscreen ist denkbar. Hier und vorzugsweise handelt es sich bei dem Eingabeinhalt 5 um einen, insbesondere ausgesprochenen, Text.

Die Vorrichtung 1, insbesondere eine Datenverarbeitungseinrichtung 7 der Vorrichtung 1, kann den Eingabeinhalt 5 analysieren und auf der Analyse basierend einen auszusprechenden Inhalt 8, insbesondere Text, erzeugen. Unter einer "Datenverarbeitungseinrichtung" ist im Rahmen der vorliegenden Erfindung eine Vorrichtung zur automatischen Verarbeitung von Daten, insbesondere Programmcode, zu verstehen. Die Datenverarbeitungseinrichtung 7 kann insbesondere einen Prozessor, Speicher, eine interne und/oder externe Datenbank und/oder eine Kommunikationseinrichtung zur Verbindung mit dem Internet und/oder einem anderen Computer aufweisen.

Unter dem Begriff "Inhalt" ist im Rahmen der vorliegenden Erfindung eine Information zu verstehen, die akustisch und/oder visuell darstellbar ist. So kann es sich bei dem Inhalt 8 beispielsweise um, insbesondere gesprochenen, Text, Töne, Laute oder dergleichen handeln.

Die Vorrichtung 1 weist des Weiteren vorzugsweise eine akustische Ausgabeeinrichtung 9 zur akustischen Ausgabe des Inhalts 8 auf. Bei der akustischen Ausgabeeinrichtung 9 kann es sich beispielsweise um einen Lautsprecher handeln, der integraler Bestandteil der Vorrichtung 1 ist oder als separates Teil/Gerät der Vorrichtung 1 ausgebildet und/oder mit der Eingabeeinrichtung 4 kombiniert ist.

Über die Ausgabeeinrichtung 9 kann eine akustische Ausgabe des zuvor erzeugten Inhalts 8 durch den Avatar 3 erfolgen. Gleichzeitig kann die visuelle Ausgabe durch den Avatar 3 über den Bildschirm 2 erfolgen. Auf diese Weise kann eine Kommunikation zwischen dem Nutzer 6 und dem Avatar 3 ermöglicht werden.

Zur Unterstützung der akustischen Ausgabe des Inhalts 8 ist die Vorrichtung 1 vorzugsweise dazu ausgebildet, die Lippenbewegungen des Avatars 3 und die akustische Ausgabe des Inhalts 8 zu synchronisieren. Unter dem Begriff "Lippenbewegung" ist im Rahmen der vorliegenden Erfindung die Lippenbewegung und vorzugsweise die Mimik und/oder der Ausdruck des Gesichts des Avatars 3 bei der Aussprache des Inhalts 8 zu verstehen.

Der Nutzer 6 hört somit die akustische Ausgabe durch den Avatar 3 und sieht auf dem Bildschirm 2 eine zu der akustischen Ausgabe synchron laufende Lippenbewegung des Avatars 3. Auf diese Weise kann das Verständnis des Nutzers 6 erhöht und die Kommunikation zwischen dem Nutzer 6 und dem Avatar 3 verbessert werden.

Während der Nutzer 6 über die Eingabeeinrichtung 4 den Eingabeinhalt 5 eingibt, wird vorzugsweise über den Bildschirm 2 der Avatar 3 angezeigt. Vorzugsweise wird der Avatar 3 im bewegten Zustand gezeigt, wobei eine natürlich zuhörende Bewegung des Avatars 3 dargestellt wird. Unter dem Begriff "natürlich zuhörende Bewegung" ist im Rahmen der vorliegenden Erfindung eine Bewegung einer natürlichen Person zu verstehen, die einem Nutzer 6 zuhört. Auf diese Weise wird von dem Avatar 3 ein natürliches Handeln bzw. eine natürliche Bewegung von einer real existierenden Person dargestellt und/oder imitiert. Insbesondere führt der Avatar 3 während der Eingabe des Eingabeinhalts 5 durch den Nutzer 6 keine sprechenden oder sprechähnliche Lippenbewegungen durch.

Während der auszusprechende Inhalt 8 erzeugt wird, wird der Avatar 3 vorzugsweise mit natürlich zuhörenden Bewegungen dargestellt. Der Übergang zwischen der natürlich zuhörenden Bewegung und der Ausgabe des auszusprechenden Inhalts 8 ist dann vorzugsweise flüssig ausgebildet. Die Darstellung des Avatars 3 erfolgt somit ruckelfrei und beim Übergang zwischen der natürlich zuhörenden Bewegung und der Ausgabe des auszusprechenden Inhalts 8 ist für den Nutzer 6 kein sprunghafter Übergang, sondern eine gleichmäßige, natürliche Bewegung des Avatars 3 zu sehen bzw. zu erkennen.

Unter dem Begriff "Ausgabe des auszusprechenden Inhalts" ist im Rahmen der vorliegenden Erfindung die akustische Ausgabe des auszusprechenden Inhalts und die visuelle Anzeige der dazu synchronen Lippenbewegungen des Avatars zu verstehen, sofern nichts anderes beschrieben ist.

Insbesondere ist vorgesehen, dass die visuelle Darstellung des Avatars 3 während der Eingabe durch den Nutzer 6 und/oder der Erzeugung des auszusprechenden Inhalts 8 und/oder bis zur Ausgabe des auszusprechenden Inhalts 8 mittels wenigstens einer vorgegebenen Bewegungssequenz 10 erfolgt, wobei die vorgegebene Bewegungssequenz 10 eine vorgegebene Abspiellänge von weniger als 1 s aufweist und/oder wobei die vorgegebene Bewegungssequenz eine vorgegebene Anzahl von weniger als 60 Frames 11 aufweist.

Fig. 2 zeigt ein schematisches Ablaufdiagramm eines vorschlagsgemäßen Verfahrens zur akustischen und visuellen Ausgabe eines auszusprechenden Inhalts 8 durch den Avatar 3 bzw. einzelner Verfahrensschritte des vorschlagsgemäßen Verfahrens.

Das Verfahren ist vorzugsweise mehrstufig bzw. mehrschrittig ausgebildet. Insbesondere weist das Verfahren mehrere Verfahrensschritte auf, wobei die einzelnen Verfahrensschritte grundsätzlich unabhängig voneinander und in beliebiger Reihenfolge durchgeführt werden können, sofern im Folgenden nicht anders erläutert.

Das vorschlagsgemäße Verfahren wird vorzugsweise mittels der Vorrichtung 1 zur Datenverarbeitung, insbesondere mittels der Eingabeausrichtung 4, des Bildschirms 2 und/oder der Ausgabeeinrichtung 9, durchgeführt.

Die Vorrichtung 1 zur Datenverarbeitung ist vorzugsweise zur Ausführung des hierin beschriebenen Verfahrens bzw. einzelner oder aller Verfahrensschritte ausgebildet.

Vorzugsweise sind die Befehle bzw. ist der Algorithmus zur Ausführung des vorschlagsgemäßen Verfahrens bzw. einzelner Verfahrensschritte des vorschlagsgemäßen Verfahrens elektronisch in einem (Daten-) Speicher der Vorrichtung 1, insbesondere der Datenverarbeitungseinrichtung 7, gespeichert.

Es ist jedoch auch möglich, dass ein oder mehrere Verfahrensschritte mittels einer (externen) Einrichtung bzw. eines (externen) Gerätes, durchgeführt werden und/oder einzelne oder mehrere Befehle zur Ausführung des Verfahrens bzw. einzelner Verfahrensschritte dort gespeichert sind.

Das vorschlagsgemäße Verfahren beinhaltet vorzugsweise einen oder mehrere Verfahrensschritte und/oder ein Programm, um den Avatar 3 während der Eingabe durch den Nutzer 6 und/oder der Erzeugung des auszusprechenden Inhalts 8 bis zur Ausgabe des Inhalts 8 mit einer natürlich zuhörenden Bewegung darzustellen.

Das vorschlagsgemäße Verfahren zeichnet sich dadurch aus, dass die visuelle Darstellung des Avatars 3 während der Eingabe durch den Nutzer 6 und/oder der Erzeugung des auszusprechenden Inhalts 8 und/oder bis zur Ausgabe des auszusprechenden Inhalts 8 mittels wenigstens einer vorgegebenen Bewegungssequenz 10 erfolgt, wobei die vorgegebene Bewegungssequenz 10 eine vorgegebene Abspiellänge von weniger als 1 s aufweist und/oder wobei die vorgegebene Bewegungssequenz 10 eine vorgegebene Anzahl von weniger als 60 Frames 11 aufweist. Es ist dann möglich, die Ausgabe des auszusprechenden Inhalts 8 bereits innerhalb von weniger als 1 s zu beginnen nachdem der auszusprechenden Inhalts 8 erzeugt und mit Lippenbewegungen synchronisiert ist. Gleichzeitig kann ein flüssiger Übergang zwischen der natürlich zuhörenden Bewegung des Avatars 3 und der Ausgabe des auszusprechenden Inhalts 8 durch den Avatar 3 erfolgen. Insbesondere kann auf einen plötzlichen Abbruch der natürlich zuhörenden Bewegung des Avatars 3 verzichtet werden, um den auszusprechenden Inhalt 8 zeitnah auszugeben. Auf diese Weise kann ein Gespräch ohne eine als vom Nutzer 6 störend empfundene Pause zwischen der Eingabe und einer Ausgabe durch den Avatar 3 erfolgen.

Der Erfindung liegt die Erkenntnis zugrunde, dass eine Simulation bzw. Berechnung einer Bewegung des Avatars 3 zwischen der natürlich zuhörenden Bewegung und den Bewegungen des Avatars 3 bei der Ausgabe des auszusprechenden Inhalts 8 nicht notwendig ist, wenn die natürlich zuhörende Bewegung regelmäßig in weniger als 1 s ein Ende und damit einen definierten Zustand erreicht, zu der ein flüssiger Übergang zur Ausgabebewegung des Avatars 3 möglich ist. Auch kann auf einen abrupten Abbruch der natürlich zuhörenden Bewegung verzichtet werden, wodurch ein sprunghafter Übergang zur Bewegung des Avatars 3 bei der Ausgabe des auszusprechenden Inhalts 8 vermieden werden kann.

Es ist dann insbesondere möglich, dass ein flüssiger Übergang an definierten Stellen - nämlich am Ende der vorgegebenen Bewegungssequenz 10 - zur Ausgabe des auszusprechenden Inhalts 8 realisiert wird. Auf diese Weise kann mit einer geringen Rechenleistung und/oder mit geringem Aufwand ein flüssiger Übergang zwischen der natürlich zuhörenden Bewegung und der Bewegung des Avatars 3 bei der Ausgabe des auszusprechenden Inhalts 8 erreicht werden.

Das Verfahren wird vorzugsweise durch den Nutzer 6 gestartet, beispielsweise durch Öffnen eines entsprechenden Programms und/oder einer entsprechenden Internetseite und/oder Eingabe eines entsprechenden Befehls. Beispielsweise kann das Öffnen eines entsprechenden Programms oder die Eingabe eines entsprechenden Befehls durch den Nutzer 6 mittels der Eingabeeinrichtung 4 erfolgen, vorzugsweise in einem ersten Verfahrensschritt/Vorgang A1.

Es ist auch möglich, dass das Verfahren durch die Aussprache eines vorgegebenen Befehls durch den Nutzer 6 gestartet wird, beispielsweise durch die Aussprache von "Hallo Avatar" oder einen anderen Startbefehl.

Optional kann der Nutzer 6 in einem weiteren/zweiten Verfahrensschritt A2 über die Eingabeeinrichtung 4 einen Eingabeinhalt 5, insbesondere als gesprochenen Text, eingeben. Bei dem Eingabeinhalt 5 kann es sich um eine Frage, eine Bitte um Information und/oder eine Aussage handeln. Hier und vorzugsweise handelt es sich bei dem Eingabeinhalt 5 um eine Frage.

Der Eingabeinhalt 5 wird vorzugsweise aufgenommen, und/oder gespeichert, um eine im Folgenden beschriebene Bearbeitung durchzuführen.

In einem weiteren/dritten Verfahrensschritt A3 wird vorzugsweise die Eingabe bzw. der Eingabeinhalt 5 des Nutzers 6 analysiert.

So kann nach der Erfassung der Eingabe bzw. des Eingabeinhalts 5 und/oder nach Speicherung der Eingabe bzw. des Eingabeinhalts 5 (zweiter Verfahrensschritt A2) eine Verarbeitung erfolgen, um die Qualität des erfassten Eingabeinhalts 5 zu verbessern und die Erkennungsgenauigkeit des erfassten Eingabeinhalt 5 zu erhöhen. Die Verarbeitung kann alternativ gestartet werden, wenn Teile der Eingabe bzw. des Eingabeinhalts 5 erfasst oder gespeichert sind. Dabei können beispielsweise Hintergrundgeräusche und Störungen eliminiert werden. Alternativ oder zusätzlich können bestimmte Frequenzen gefiltert werden, um irrelevante Frequenzen zu eliminieren. Es ist zusätzlich oder alternativ auch möglich, den Lautstärkepegel des Tons zu standardisieren. Es ist zudem möglich, lediglich einzelne oder alle vorgenannten Verarbeitungen durchzuführen, beispielsweise nacheinander, parallel und/oder iterativ.

Darüber hinaus kann im dritten Verfahrensschritt A3 nach phonetischen Übereinstimmungen und Mustern gesucht werden. Die Übereinstimmungen und Muster können dann mit in einer Datenbank gespeicherten Mustern abgeglichen werden, um wenigstens einzelne Bestandteile des Eingabeinhalts 5 zu identifizieren. Bei der Datenbank kann es sich um eine interne und/oder externe Datenbank, insbesondere einer cloudbasierten Datenbank, handeln. Die Datenbank kann als Speicher, insbesondere Festplatte, ausgebildet sein. Die Datenbank kann als Festplatte Bestandteil der Vorrichtung 1 oder eines weiteren Computers sein.

Im dritten Verfahrensschritte A3 kann der insbesondere gesprochene Eingabeinhalt 5 in, insbesondere maschinenlesbaren, Text und/oder Code umgewandelt werden. Die Umwandlung kann mittels einer Voice2Text-Anwendung erfolgen. Bei der Voice2Text-Anwendung kann es sich insbesondere um eine Spracherkennung handeln, die gesprochenen Text transkribiert.

Es ist auch möglich, dass der dritte Verfahrensschritt A3 dazu ausgebildet ist, durch maschinelles Lernen und/oder künstliche Intelligenz die Spracherkennung zu unterstützen und/oder die Genauigkeit und Anpassungsfähigkeit der Bearbeitung zu verbessern.

Vorzugsweise wird im dritten Verfahrensschritt A3 der logische Inhalt bzw. die Bedeutung des insbesondere transkribierten Eingabeinhalts 5 bzw. der Eingabetext analysiert. Dazu wird vorzugsweise ein Large Language Modul (LLM) verwendet. Unter dem Begriff "Large Language Modul" ist vorliegend ein generatives Sprachmodell für Texte bzw. textbasierte Inhalte zu verstehen. Large Language Moduls verwenden künstliche Intelligenz, künstliche neuronale Netzwerke und/oder Deep Learning, um natürliche Sprache zu verarbeiten, zu verstehen und/oder gegebenenfalls zu generieren. Entsprechende Sprachmodelle werden verwendet, um komplexe Texte, Fragen und/oder Anweisungen zu verstehen.

Hier und vorzugsweise wird der Eingabeinhalt 5 bzw. der Eingabetext anhand von Ausdrücken, Synonymen, Wörtern, Satzbestandteilen und/oder Sätzen mittels des Large Language Models analysiert. Mithilfe des Large Language Models kann somit die Bedeutung des Eingabeinhalts 5 des Nutzers 6 erfasst bzw. verstanden werden.

Nachfolgend wird vorzugsweise in einem weiteren/vierten Verfahrensschritt A4 eine Reaktion bzw. Antwort auf den Eingabeinhalt 5 des Nutzers 6 generiert.

Die Vorrichtung 1 bzw. das Programm kann mehrere hinterlegte vorgegebene Inhaltsbausteine 12 aufweisen. Bei den vorgegebenen Inhaltsbausteinen 12 kann es sich um Antworten und/oder Informationen zu verschiedenen Themen handeln.

Bei den Inhaltsbausteinen 12 kann es sich um, beispielsweise durch Menschen, geprüfte und damit objektiv richtige Informationen bzw. Reaktionen handeln. Auf diese Weise können nur Informationen bzw. Reaktionen ausgegeben werden, die auf objektiv richtigen Inhaltsbausteinen 12 basieren. Es kann somit verhindert werden, dass erfundene und/oder nicht objektiv richtige Informationen bzw. Reaktionen durch den Avatar 3 bzw. die Vorrichtung 1 ausgegeben werden. Vorzugsweise ist der Inhaltsbaustein 12 als Text ausgebildet oder enthält Text.

Die Inhaltsbausteine 12 können in einer Datenbank gespeichert bzw. hinterlegt sein. Die Datenbank kann insbesondere als Speicher(chip) und/oder Festplatte ausgebildet sein. Die Datenbank kann Bestandteil der Vorrichtung 1 bzw. als interne Datenbank ausgebildet sein. Es ist auch möglich, dass es sich bei der Datenbank um eine externe Datenbank handelt. Die Vorrichtung 1 kann dann beispielsweise über das Internet auf die Datenbank zugreifen.

Um auch komplexe Fragen beantworten zu können bzw. auf komplexe Eingabeinhalte 5 adäquat reagieren zu können, kann der vierte Verfahrenschritt A4 iterativ durchlaufen werden, um auch mehrere vorgegebene Inhaltsbausteine 12 auszuwählen. Auf diese Weise kann eine Vielzahl von Informationen zur Erzeugung des auszusprechenden Inhalts 8 verwendet werden. In Fig. 2 ist die Auswahl von zwei Inhaltsbausteinen 12 durch die Linie 13A gezeigt.

Die ausgewählten vorgegebenen Inhaltsbausteine 12 bzw. der ausgewählte vorgegebene Inhaltsbaustein 12 kann bzw. können zu einem auszusprechenden Inhalt 8 verarbeitet werden. Alternativ oder zusätzlich kann aus dem ausgewählten vorgegebenen Inhaltsbaustein 12 bzw. den ausgewählten vorgegebenen Inhaltsbausteinen 12 der auszusprechender Inhalt 8 formuliert werden. Bei dem auszusprechenden Inhalt 8 kann es sich um eine Antwort auf den Eingabeinhalt 5 bzw. Reaktion auf den Eingabeinhalt 5 handeln. Alternativ oder zusätzlich kann der auszusprechende Inhalt 8 einen Teil einer Antwort auf den Eingabeinhalt 5 bzw. einen Teil einer Reaktion auf den Eingabeinhalt 5 aufweisen.

Werden mehrere vorgegebene Inhaltsbausteine 12 ausgewählt, können diese einzeln weiterverarbeitet werden oder in einer an den Eingabeinhalt 5 angepassten Reihenfolge zu einer logischen Informationseinheit zusammengefasst bzw. aneinander angeordnet und/oder verschachtelt werden, um den auszusprechenden Inhalt 8 zu formulieren.

Vorzugsweise entspricht der auszusprechende Inhalt 8 einem ausgewählten Inhaltsbaustein 12. Werden mehrere vorgegebene Inhaltsbausteine 12 ausgewählt, entspricht der auszusprechende Inhalt 9 vorzugsweise den aneinandergereihte und/oder ineinander verschachtelten Inhaltsbausteinen 12, wie in Fig. 2 gezeigt ist.

Im Anschluss kann in einem weiteren/fünften Verfahrensschritt A5 eine zum auszusprechenden Inhalt 8 synchrone Lippenbewegung simuliert und/oder berechnet werden. Auf diese Weise kann zu jedem auszusprechenden Inhalt, auch unabhängig von der verwendeten Sprache, eine synchrone Lippenbewegung erzeugt werden.

Alternativ oder zusätzlich ist es auch möglich, dass eine vorgegebene Lippenbewegungssequenz 14 verwendet wird, um eine zum auszusprechenden Inhalt 8 synchrone Lippenbewegung zu erzeugen. Es kann vorgesehen sein, dass eine vorgegebene Lippenbewegungssequenz 14 zum auszusprechenden Inhalt 8 abgespielt wird.

Insbesondere kann die vorgegebene Lippenbewegungssequenz 14 aus einer Mehrzahl von vorgegebenen Lippenbewegungssequenzen14 ausgewählt werden, wie in Fig. 2 durch die Linie 13B gezeigt ist. Auf diese Weise kann eine passende Lippenbewegungssequenz 14 ausgewählt werden. Es ist insbesondere möglich, die vorgegebene Lippenbewegungssequenz 14 in Abhängigkeit des auszusprechenden Inhalts 8 auszuwählen. Auf diese Weise kann eine am besten zum auszusprechenden Inhalt 8 passende Lippenbewegungssequenz 14 ausgewählt werden.

Im Anschluss können im fünften Verfahrensschritt A5 die Lippenbewegungssequenz 14 und der auszusprechende Inhalt 8 zueinander synchronisiert werden, um die akustische Ausgabe des auszusprechenden Inhalts 8 und die visuelle Ausgabe der Lippenbewegungssequenz 14 synchron zueinander erfolgen zu lassen.

Daran anschließend kann in einem weiteren/sechsten Verfahrensschritt A6 die akustische und visuelle Ausgabe des auszusprechenden Inhalts 8 erfolgen, also die synchron zueinander erfolgende akustische Ausgabe des Inhalts 8 über die akustische Ausgabeeinrichtung 9 und die visuelle Ausgabe der Lippenbewegungssequenz 14 über den Bildschirm 2.

Im Anschluss an den ersten Verfahrensschritt A1 wird in einem, insbesondere parallel zum Verfahrensschritt A2 laufenden, weiteren siebten Verfahrensschritt A7 vorzugsweise über den Bildschirm 2 der Avatar 3 angezeigt bzw. dargestellt. Vorzugsweise wird der Avatar 3 im bewegten Zustand gezeigt, wobei eine natürlich zuhörende Bewegung des Avatars 3 dargestellt wird. Auf diese Weise wird von dem Avatar 3 ein natürliches Handeln bzw. eine natürliche Bewegung von einer real existierenden Person imitiert. Insbesondere führt der Avatar 3 während des dritten Verfahrensschritts A3 keine sprechenden oder sprechähnliche Lippenbewegungen durch.

Insbesondere ist vorgesehen, dass die visuelle Darstellung des Avatars 3 während der Eingabe durch den Nutzer 6 mittels wenigstens einer vorgegebenen Bewegungssequenz 10 erfolgt, wobei die vorgegebene Bewegungssequenz 10 eine vorgegebene Abspiellänge von weniger als 1 s aufweist und/oder wobei die vorgegebene Bewegungssequenz 10 eine vorgegebene Anzahl von weniger als 60 Frames 11 aufweist. Es ist dann möglich, die Bewegungssequenz 10 und damit die natürlich zuhörende Bewegung des Avatars 3 in regelmäßigen Abständen, die weniger als 1 s auseinander liegen, an definierten Stellen in die akustische und visuelle Ausgabe durch den Avatar 3 übergehen zu lassen. Auf diese Weise kann ein flüssiger Übergang geschaffen werden.

Insbesondere ist vorgesehen, dass die visuelle Darstellung des Avatars 3 auch während der Erzeugung des auszusprechenden Inhalts 8 und/oder bis zur Ausgabe des auszusprechenden Inhalts 8 mittels der wenigstens einen vorgegebenen Bewegungssequenz 10 erfolgt. Die Darstellung des Avatars 3 erfolgt dann vorzugsweise während der Verfahrensschritte A2 bis A5 mittels der vorgegebenen Bewegungssequenz 10.

Insbesondere weist die Bewegungssequenz 10 eine vorgegebene Abspiellänge von weniger als 0,75 s, vorzugsweise von weniger als 0,6 s, weiter vorzugsweise von 0,5 s oder weniger, und/oder von mehr als 0,25 s, auf. Die Bewegungssequenz 10 kann insbesondere eine vorgegebene Abspiellänge von 0,4 s bis 0,5 s aufweisen. Auf diese Weise kann innerhalb einer besonders kurzen Zeitspanne ein flüssiger Übergang zur Ausgabe des auszusprechenden Inhalts 8 erzeugt werden.

Alternativ oder zusätzlich ist vorgesehen, dass die Bewegungssequenz 10 eine vorgegebene Anzahl von weniger als 40 Frames 11, vorzugsweise weniger als 30 Frames 11, weiter vorzugsweise weniger als 25 Frames 11, und/oder mehr als 10 Frames 11, aufweist. Insbesondere kann die Bewegungssequenz 10 eine vorgegebene Anzahl von 13 bis 23 Frames 11 aufweisen.

Insbesondere kann während der visuellen Darstellung des Avatars 3 mittels der Bewegungssequenz 10 im siebten Verfahrensschritt A7 ein Abbruchkriterium in einem weiteren, insbesondere parallelen, weiteren achten Verfahrensschritt A8 überprüft werden. Bei Erfüllung des Abbruchkriteriums kann die Bewegungssequenz 10, die gerade abgespielt wird, zu Ende ausgegeben und im Anschluss der auszusprechende Inhalt 8 durch den Avatar 3 ausgegeben werden. Wird das Abbruchkriterium nicht erfüllt kann die Bewegungssequenz 10 zu Ende ausgegeben und im Anschluss erneut oder eine weitere Bewegungssequenz 10 ausgegeben werden.

Das Abbruchkriterium ist vorzugsweise erfüllt, wenn der auszusprechende Inhalt 8 und dazu synchrone Lippenbewegungen vorliegen bzw. eine synchrone Ausgabe des auszusprechenden Inhalts 8 auf akuschstische Weise und den dazu synchronen Lippenbewegungen auf viselle Weise erfolgen kann. Insbesondere ist das Abbruchkriterium erst erfüllt wenn der fünfte Verfahrensschritt A5 abgeschlossen ist.

Solange der auszusprechende Inhalt 8 und/oder die Lippenbewegungen noch nicht vorliegen und/oder eine synchrone Ausgabe des auszusprechenden Inhalts 8 auf akustische Weise und den dazu synchronen Lippenbewegungen auf viselle Weise noch nicht erfolgen kann, ist das Abbruchkriterium vorzugsweise nicht erfüllt.

Entsprechend können die Verfahrensschritte A7 und A8 wiederholte werden, um aufeinander nachfolgend mehrere Bewegungssequenzen 10 auszugeben, bis der sechste Verfahrensschritt A6 - die Ausgabe des auszusprechenden Inhalts 8 - durchgeführt werden kann.

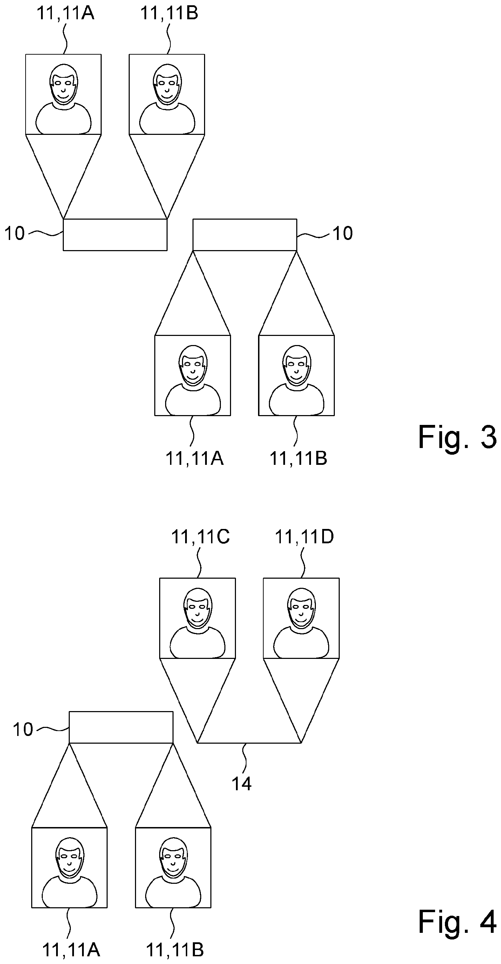

Um einen flüssigen und/oder gleichmäßigen Übergang bei der wiederholten Wiedergabe der Bewegungssequenz 10 zu erreichen ist vorzugsweise vorgesehen, dass der Anfang und das Ende der Bewegungssequenz identisch oder derart ähnlich zueinander sind, dass bei einer wiederholten Wiedergabe der Bewegungssequenz 10 eine flüssiger Übergang zwischen dem Ende und dem Anfang der Bewegungssequenz 10 sichergestellt ist (Vgl. Fig. 3 und Fig. 4).

Insbesondere kann vorgesehen sein, dass der erste Frame 11A und der letzte Frame 11B der Bewegungssequenz 10 identisch ausgebildet sind, wie in Fig. 3 und Fig. 4 gezeigt ist. Alternativ ist es auch möglich, dass der erste Frame 11A und der letzte Frame 11B der Bewegungssequenz 10 derart ähnlich zueinander sind, dass bei einer wiederholten Wiedergabe der Bewegungssequenz 10 ein flüssiger Übergang zwischen dem Ende und dem Anfang der Bewegungssequenz 10 sichergestellt ist.

Um im siebten Verfahrensschritt A7 die eine Bewegungssequenz 10 nicht mehrmals unmittelbar hintereinander wiederholen zu müssen, kann die vorgegebene Bewegungssequenz 10 aus einer Mehrzahl von vorgegebenen Bewegungssequenzen 10 ausgewählt werden. In Fig. 2 ist die Auswahl einer Bewegungssequenz 10 durch die Linie 13C gezeigt. Es ist dann möglich, verschiedene Bewegungen des Avatars 3 nacheinander darzustellen, und damit ein für den Nutzer 6 natürliches Erscheinungsbild des Avatars 3 zu erzeugen.

Die Auswahl der Bewegungssequenz 10 aus der Mehrzahl von Bewegungssequenzen 10 kann dabei zufällig oder in einer vorgegebenen Reihenfolge und/oder Häufigkeit oder nach anderen Auswahlkriterien erfolgen.

Die Bewegungssequenz 10 kann ein Blinzeln, ein Nasenrümpfen, ein Lächeln, eine Augenbewegung, eine Kopfbewegung, eine Handbewegung und/oder ein Zurechtrücken einer Brille und/oder eines Kleidungs- bzw. Schmuckstücks des Avatars 3 zeigen, um eine natürliche Bewegung durch den Avatar 3 zu erhalten. Es sind auch weitere Bewegungen, wie beispielsweise ein Stirnrunzeln, ein Schulterzucken, eine Bewegung des Oberkörpers oder dergleichen, möglich.

So ist es möglich, während der Verfahrensschritte A2 bis A5 und somit während des Verfahrensschritts A7 die Bewegung des Avatars 3 durch Blinzeln, Lächeln, Augenbewegungen und/oder dergleichen darzustellen. Auf diese Weise kann der Avatar 3 mit abwechslungsreichen Bewegungen dargestellt werden.

Um einen flüssigen Übergang zwischen aufeinanderfolgenden, unterschiedlichen Bewegungssequenzen 10 zu erreichen, sind vorzugsweise der Anfang und das Ende einer Bewegungssequenz 10 identisch oder derart ähnlich ausgebildet, dass bei einer Wiedergabe von zwei aufeinander folgenden Bewegungssequenzen 10 ein flüssiger Übergang zwischen den Bewegungssequenzen 10 erzielt wird.

Insbesondere ist vorgesehen, dass der erste Frame 11A und der letzte Frame 11B einer Bewegungssequenz 10 identisch (Fig. 3) sind. Es ist alternativ auch möglich, dass der erste und der letzte Frame 11A, 11B einer Bewegungssequenz 10 derart ähnlich zueinander sind, dass bei einer Wiedergabe von zwei aufeinander folgenden Bewegungssequenzen 10 ein flüssiger Übergang zwischen den Bewegungssequenzen 10 erzielt wird.

Es ist dann auf einfache Weise möglich, einen flüssigen Übergang zwischen den Bewegungen das Avatars 3 bzw. den Bewegungssequenzen 10 zu erzeugen.

Insbesondere kann der Übergang zwischen der natürlich zuhörenden Bewegung des Avatars 3 im siebten Verfahrensschritt A7 und den Bewegungen des Avatars 3 bei der akustischen und visuellen Ausgabe des auszusprechenden Inhalts 8 im sechsten Verfahrensschritt A6 flüssig ausgebildet sein bzw. flüssig dargestellt werden.

Werden die Lippenbewegungen des Avatars 3 zum auszusprechenden Inhalt 8 simuliert bzw. errechnet, so kann der Anfang der Simulation, insbesondere ein erster Frame 11, identisch oder derart gleich zum Ende, insbesondere dem letzten Frame 11B, der Bewegungssequenz 10 sein, dass bei der Wiedergabe der Bewegungssequenz 10 und der anschließenden visuellen Ausgabe der Lippenbewegung ein flüssiger Übergang erzielt wird.

Vorzugsweise wird zur Darstellung der Lippenbewegungen eine vorgegebene Lippenbewegungssequenz 14 verwendet bzw. abgespielt. Insbesondere ist vorgesehen, dass der Anfang, insbesondere der erste Frame 11C, der vorgegebenen Lippenbewegungssequenz 14 zum Ende, insbesondere dem letzten Frame 11B, der Bewegungssequenz 10 identisch oder derart ähnlich ausgebildet ist, dass bei einer Wiedergabe der Bewegungssequenz 10 mit anschließender Wiedergabe der Lippenbewegungssequenz 14 ein flüssiger Übergang erzielt wird, wie in Fig. 4 gezeigt ist.

Um eine weitere flüssig ablaufende Kommunikation zwischen dem Nutzer 6 und dem Avatar 3 zu ermöglichen, kann nach dem sechsten Verfahrensschritt A6 direkt mit den parallellaufenden Verfahrensschritten A2 und A7 fortgefahren werden. Ein flüssiger Übergang zwischen den Bewegungen des Avatars 3 bei der Ausgabe des auszusprechenden Inhalts 8 im sechsten Verfahrensschritt A6 und der nachfolgenden natürlich zuhörenden Bewegung des Avatars 3 im siebten Verfahrensschritt A7 kann erreicht werden, wenn der Anfang der Bewegungssequenz 10 und das Ende der Lippenbewegungssequenz 14 identisch oder derart ähnlich zueinander sind, dass bei einer Wiedergabe der Lippenbewegungssequenz 14 mit anschließender Wiedergabe der Bewegungssequenz 10 ein flüssiger Übergang erzielt wird.

Insbesondere kann der erste Frame 11A der Bewegungssequenz 10 zum letzten Frame 11D der vorgegebenen Lippenbewegungssequenz 14 identisch oder derart ähnlich sein (Fig. 4), dass bei einer Wiedergabe der Lippenbewegungssequenz 14 mit anschließender Wiedergabe der Bewegungssequenz 10 ein flüssiger Übergang erzielt wird.

Die Auswahl der Bewegungssequenz 10 kann in Abhängigkeit von der Eingabe durch den Nutzer 6 bzw. in Abhängigkeit des Eingabeinhalts 5 erfolgen. Insbesondere kann vorgesehen sein, dass eine Echtzeitanalyse der Eingabe durch den Nutzer 6 durchgeführt wird. Es ist dann möglich, dass die Auswahl einer Bewegungssequenz 10 und/oder der Bewegungssequenzen 10 in Abhängigkeit von der durchgeführten Echtzeitanalyse erfolgt. So kann beispielsweise ein erstaunt wirkender Gesichtsausdruck des Avatars 3 als Reaktion auf einen Bestandteil des Eingabeinhalts 5 angezeigt werden. Auf diese Weise kann der Avatar 3 eine visuelle Rückmeldung an den Nutzer 6 bereits während der Eingabe des Eingabeinhalts 5 bereitstellen.

Vorzugsweise können Zuordnungskriterien vorgegeben sein oder vorgegeben werden, die eine Zuordnung von Eingabeinhalten 5, Bestandteilen des Eingabeinhalts 5, von Analysen des Eingabeinhalts 5 und/oder Bestandteilen der Analysen des Eingabeinhalts 5 zu einer Bewegungssequenz 10 oder mehreren Bewegungssequenzen 10 ermöglichen. Mithilfe der Zuordnungskriterien kann dann eine Auswahl einer oder mehrerer Bewegungssequenzen 10 erfolgen.

Der Eingabeinhalt 5 wird vorzugsweise im dritten Verfahrensschritt A3, insbesondere mittels eines Large Language Models analysiert, wie bereits erläutert worden ist. Basierend auf dieser Analyse der Eingabe bzw. des Eingabeinhalts 5 kann alternativ oder zusätzlich eine Bewegungssequenz 10 ausgewählt werden.

Bei dem Avatar 3 kann es sich um eine existierende, reale Person oder auch eine fiktive Person handeln. So kann es sich bei dem Avatar 3 beispielsweise um einen realen oder fiktiven Mitarbeiter einer Firma, beispielsweise aus der Personalabteilung handeln. Der Nutzer 6 kann ebenfalls ein Mitarbeiter derselben Firma sein. Der Nutzer 6 kann mittels des Verfahrens und/oder der Vorrichtung 1 auf besonders einfache Weise relevante betriebsbezogene Fragen in kurzer Zeit beantwortet bekommen, ohne andere Mitarbeiter von ihrer Arbeit abzuhalten bzw. abzulenken. So kann beispielsweise eine Frage, wie ein Urlaubsantrag auszufüllen ist, oder wie viele Urlaubstage dem Nutzer 6 noch zustehen, in besonders schneller und einfacher Weise richtig beantwortet werden. Es sind auch andere Anwendungsfälle bzw. Konstellationen möglich.

Ein weiterer Aspekt der vorliegenden Erfindung betrifft ein Computerprogramm, umfassend Befehle, die bei Ausführung des Computerprogramms durch einen Computer bzw. die erfindungsgemäße Vorrichtung 1 diesen veranlassen, das vorschlagsgemäßes Verfahren auszuführen. Auf alle Ausführungen zum vorschlagsgemäßen Verfahren darf insoweit verwiesen werden. Insbesondere werden entsprechende Vorteile erzielt.

Ein weiterer Aspekt der vorliegenden Erfindung betrifft einen computerlesbaren Datenträger, auf dem das vorschlagsgemäße Computerprogramm gespeichert ist. Auf alle Ausführungen zum vorschlagsgemäßen Computerprogramm darf insoweit verwiesen werden. Insbesondere werden entsprechende Vorteile erzielt.

**Bezugszeichenliste:**

| | | | |
|---|---|---|---|
| 1 | Vorrichtung | 10 | Bewegungssequenz |
| 2 | Bildschirm | 11 | Frame |
| 3 | Avatar | 11A | Frame |
| 4 | Eingabeeinrichtung | 11B | Frame |
| 4A | Tastatur | 11C | Frame |
| 4B | Maus | 11D | Frame |
| 4C | Touchpad | 12 | Inhaltsbaustein |
| 4E | Kamera | 13A | Linie |
| 4E | Mikrofon | 13B | Linie |
| 5 | Eingabeinhalt | 13C | Linie |
| 6 | Nutzer | 14 | Lippenbewegungssequenz |
| 7 | Datenverarbeitungseinrichtung | | |
| 8 | Inhalt | A1 - A8 | Verfahrensschritte |
| 9 | Ausgabeeinrichtung | | |

## Patentansprüche

1. Verfahren zur akustischen und visuellen Ausgabe eines auszusprechenden Inhalts (8) durch einen Avatar (3),
wobei eine Eingabe durch einen Nutzer (6) erfolgt,
wobei der auszusprechende Inhalt (8) als Reaktion auf die Eingabe erzeugt und durch den Avatar (3) ausgegeben wird,
**dadurch gekennzeichnet,**
**dass** eine visuelle Darstellung des Avatars (3) während der Eingabe durch den Nutzer (6) und/oder der Erzeugung des auszusprechenden Inhalts (8) und/oder bis zur Ausgabe des auszusprechenden Inhalts (8) mittels wenigstens einer vorgegebenen Bewegungssequenz (10) erfolgt, wobei die vorgegebene Bewegungssequenz (10) eine vorgegebene Abspiellänge von weniger als 1 s aufweist, und/oder wobei die vorgegebene Bewegungssequenz (10) eine vorgegebene Anzahl von weniger als 60 Frames (11) aufweist.

2. Verfahren nach Anspruch 1, **dadurch gekennzeichnet, dass** die Bewegungssequenz (10) eine vorgegebene Abspiellänge von weniger als 0,75 s, vorzugsweise von weniger als 0,6 s, weiter vorzugsweise von 0,5 s oder weniger, und/oder von mehr als 0,25 s, aufweist, vorzugsweise dass die Bewegungssequenz (10) eine vorgegebene Abspiellänge von 0,4 s bis 0,5 s aufweist, und/oder
dass die Bewegungssequenz (10) eine vorgegebene Anzahl von weniger als 40 Frames (11), vorzugsweise weniger als 30 Frames (11), weiter vorzugsweise weniger als 25 Frames (11), und/oder mehr als 10 Frames (11), aufweist, vorzugsweise dass die Bewegungssequenz (10) eine vorgegebene Anzahl von 13 bis 23 Frames (11) aufweist.

3. Verfahren nach Anspruch 1 oder 2, **dadurch gekennzeichnet, dass** der Anfang, insbesondere der erste Frame (11A), und das Ende, insbesondere der letzte Frame (11B), der Bewegungssequenz (10) identisch oder derart ähnlich zueinander sind, dass bei einer wiederholten Wiedergabe der Bewegungssequenz ein flüssiger Übergang zwischen dem Ende und dem Anfang der Bewegungssequenz (10) sichergestellt ist.

4. Verfahren nach einem der voranstehenden Ansprüche, **dadurch gekennzeichnet, dass** die Bewegungssequenz (10) ein Blinzeln, ein Nasenrümpfen, ein Lächeln, eine Augenbewegung, eine Handbewegung, eine Kopfbewegung und/oder ein Zurechtrücken einer Brille und/oder eines Kleidungs- bzw. Schmuckstücks des Avatars (3) zeigt.

5. Verfahren nach einem der voranstehenden Ansprüche, **dadurch gekennzeichnet, dass** die vorgegebene Bewegungssequenz (10) aus einer Mehrzahl von vorgegebenen Bewegungssequenzen (10) ausgewählt wird, vorzugsweise dass die Auswahl der Bewegungssequenz (10) zufällig oder in einer vorgegebenen Reihenfolge erfolgt.

6. Verfahren nach einem der voranstehenden Ansprüche, **dadurch gekennzeichnet**, zwei oder mehr unterschiedliche vorgegebene Bewegungssequenzen (10) unmittelbar hintereinander abgespielt werden, wobei der Anfang, insbesondere der erste Frame (11A), und das Ende, insbesondere der letzte Frame (11B), jeder Bewegungssequenz (10) gleich oder derart ähnlich sind, dass bei einer Wiedergabe von zwei aufeinanderfolgenden Bewegungssequenzen (10) ein flüssiger Übergang zwischen den Bewegungssequenzen (10) erzielt wird.

7. Verfahren nach einem der voranstehenden Ansprüche, **dadurch gekennzeichnet, dass** während der visuellen Darstellung des Avatars (3) mittels der Bewegungssequenz (10) ein Abbruchkriterium überprüft wird, wobei bei Erfüllung des Abbruchkriteriums die Bewegungssequenz (10) zu Ende ausgegeben wird und im Anschluss der auszusprechende Inhalt durch den Avatar (3) ausgegeben wird, und/oder wobei bei Nichterfüllung des Abbruchkriteriums die Bewegungssequenz (10) zu Ende ausgegeben wird und im Anschluss eine weitere Bewegungssequenz (10) ausgegeben oder die Bewegungssequenz (10) wiederholt ausgegeben wird.

8. Verfahren nach einem der voranstehenden Ansprüche, **dadurch gekennzeichnet, dass** eine Echtzeitanalyse der Eingabe des Nutzers (6) durchgeführt wird und dass die Auswahl der Bewegungssequenz (10) in Abhängigkeit von der Echtzeitanalyse erfolgt.

9. Verfahren nach einem der voranstehenden Ansprüche, **dadurch gekennzeichnet, dass** die Eingabe, insbesondere mittels eines Large Language Models, analysiert wird und dass basierend auf der Analyse der Eingabe ein auszusprechender Inhalt (8) generiert und/oder ausgewählt wird.

10. Verfahren nach einem der voranstehenden Ansprüche, **dadurch gekennzeichnet, dass** eine vorgegebene Lippenbewegungssequenz (14) zum auszusprechenden Inhalt (8) abgespielt wird, vorzugsweise, dass die vorgegebene Lippenbewegungssequenz (14) aus einer Mehrzahl von vorgegebenen Lippenbewegungssequenzen (14) ausgewählt wird, weiter vorzugsweise, dass die vorgegebene Lippenbewegungssequenz (14) in Abhängigkeit von dem auszusprechenden Inhalt (8) ausgewählt wird.

11. Verfahren nach einem der voranstehenden Ansprüche, **dadurch gekennzeichnet, dass** der Anfang, insbesondere der erste Frame (11C), der vorgegebenen Lippenbewegungssequenz (14) und das Ende, insbesondere der letzte Frame (11B) der Bewegungssequenz (10) identisch oder derart ähnlich ausgebildet sind, dass bei einer Wiedergabe der Bewegungssequenz (10) mit anschließender Wiedergabe der Lippenbewegungssequenz (14) ein flüssiger Übergang erzielt wird, und/oder dass der Anfang, insbesondere der erste Frame (11A), der Bewegungssequenz (10) und das Ende, insbesondere der letzte Frame (11D), der vorgegebenen Lippenbewegungssequenz (14) identisch oder derart ähnlich zueinander sind, dass bei einer Wiedergabe der Lippenbewegungssequenz (14) mit anschließender Wiedergabe der Bewegungssequenz (10) ein flüssiger Übergang erzielt wird.

12. Verfahren nach einem der voranstehenden Ansprüche, **dadurch gekennzeichnet, dass** wenigstens ein Verfahrensschritt mittels eines Computers ausgeführt wird.

13. Vorrichtung zur Datenverarbeitung umfassend Mittel zur Ausführung eines Verfahrens nach einem der voranstehenden Ansprüche.

14. Computerprogramm, umfassend Befehle, die bei Ausführung des Computerprogramms durch einen Computer diesen veranlassen, ein Verfahren nach einem der Ansprüche 1 bis 12 auszuführen.

15. Computerlesbarer Datenträger, auf dem das Computerprogramm nach Anspruch 14 gespeichert ist.
